# EUROPEAN PATENT SPECIFICATION

(11) **EP 3 840 394 B1**
(45) Date of publication and mention of the grant of the patent: **25.03.2026**
(21) Application number: 19853317.6
(22) Date of filing: 27.08.2019
(51) Int. Cl.: H04N 21/436, H04N 21/6437, H04N 21/4363, H04N 21/41, H04N 21/845, H04L 67/56, H04L 65/1094

(54) **VIDEO SCREEN PROJECTION METHOD, DEVICE, COMPUTER EQUIPMENT AND STORAGE MEDIUM**
VIDEOPROJEKTIONSVERFAHREN, VORRICHTUNG, COMPUTERAUSRÜSTUNG UND SPEICHERMEDIUM
PROCÉDÉ DE PROJECTION D'ÉCRAN VIDÉO, DISPOSITIF, ÉQUIPEMENT INFORMATIQUE ET SUPPORT DE MÉMOIRE

(30) Priority: 30.08.2018 CN 201811005325
(43) Date of publication of application: 23.06.2021
(73) Proprietor: HUAWEI TECHNOLOGIES CO., LTD., Shenzhen, Guangdong 518129 (CN)
(72) Inventor: JIN, Linyi, Shenzhen, Guangdong 518129 (CN); CHEN, Guang, Shenzhen, Guangdong 518129 (CN); CHEN, Long, Shenzhen, Guangdong 518129 (CN)
(74) Representative: Gill Jennings & Every LLP
(86) International application number: PCT/CN2019/102896
(87) International publication number: WO 2020/043104

(56) References cited:
- WO-A1-2012/030734
- WO-A1-2018/103644
- CN-A- 104 519 397
- CN-A- 105 392 048
- CN-A- 106 454 497
- CN-A- 106 789 453
- CN-A- 107 135 417
- CN-A- 107 135 417
- CN-A- 107 613 338
- US-A1- 2017 171 341
- US-A1- 2020 120 380
- MU MU ET AL: "Closing the Gap: Human Factors in Cross-Device Media Synchronization", IEEE JOURNAL OF SELECTED TOPICS IN SIGNAL PROCESSING, IEEE, US, vol. 11, no. 1, 1 February 2017 (2017-02-01), pages 180 - 195, XP011641189, ISSN: 1932-4553, [retrieved on 20170213], DOI: 10.1109/JSTSP.2016.2638358

## Description

### TECHNICAL FIELD

The present invention relates to the field of video technologies, and in particular, to a video projection method and device, a computer device, and a storage medium.

### BACKGROUND

With the advancement of technologies, a virtual reality (virtual reality, VR) terminal is widely used in life as a personal wearable device. Due to a limitation of a size, the VR terminal cannot meet a requirement that a plurality of users view a video simultaneously. Therefore, a projection technology is required, to project a video image of the VR terminal on another screen through which a plurality of users can view a video simultaneously.

In an existing projection technology, a set-top box may serve as a video projection party to perform projection. A projection process may be as follows: A VR terminal sends a video data request to a video server. The video request carries a network protocol address of the VR terminal, video uniform resource locator (uniform resource locator, URL) information, and a network protocol address of the video server. The video server sends a video stream to the VR terminal based on the information carried in the video request. After receiving the video stream, the VR terminal plays a video indicated by the video stream. The VR terminal sends a projection request to the set-top box. The projection request carries the video stream, a play progress, and head rotation information. The set-top box plays, based on the information carried in the received projection request, a video that is being played by the VR terminal.

However, in the foregoing projection process, the VR terminal not only needs to receive the video stream, but also needs to send the video stream to the set-top box. This increases network pressure and power consumption of the VR terminal. When the network pressure of the VR terminal is excessively high, a video played by the VR terminal freezes, and the video played by the set-top box also freezes. This reduces projection quality.
CN107613338 relates to a video transmission method, a server, a VR playing terminal and a computer readable storage medium.
CN107135417 relates to a screen projection method for an HLS protocol.

### SUMMARY

The present invention is defined by the appended claims. Embodiments not falling within the scope are exemplary. Embodiments of the present invention provide a video projection method and device, a computer device, and a storage medium, to resolve problems of a projection freeze of a first terminal and excessively high network pressure and power consumption of the first terminal. Technical solutions are as follows:

According to a first aspect, a video projection method is provided, and is applied to a proxy server, the proxy server, a first terminal, and a second terminal are located in a same local area network, and the method includes:
receiving a projection proxy request message from the second terminal, where the projection proxy request message carries at least stream information of a first video stream that is being played by the first terminal;
performing, based on the stream information of the first video stream, matching on a data stream sent by a video server to the first terminal, where the video server is configured to provide the first video stream;
when finding the first video stream, replicating the first video stream to obtain a second video stream; and
sending the second video stream to the second terminal, where the second video stream is used for video playing on the second terminal.

In a possible implementation, the first video stream is a real-time transport protocol (real-time transport protocol, RTP) stream, and the stream information of the first video stream includes a 5-tuple.

In a possible implementation, the stream information of the first video stream includes URL information of the first video stream.

Based on the foregoing two possible implementations, it indicates that the first terminal can support a plurality of streaming media transfer protocols. This improves applicability performance of the first terminal, and the first terminal is universally applicable.

In a possible implementation, the projection proxy request message further includes a network protocol address of the video server, and the method further includes:
when the first video stream is not found, sending a video stream request message to the video server based on the projection proxy request message from the second terminal, where the video stream request message carries video URL information;
receiving a third video stream, where the third video stream is a video stream corresponding to the video URL information; and
sending the third video stream to the second terminal.

Based on the foregoing possible implementation, asynchronous projection caused because the proxy server cannot find the video stream that is being played by the first terminal can be avoided. This improves a synchronization effect.

In a possible implementation, the stream information of the first video stream further includes a network protocol address of the first terminal.

Based on the foregoing possible implementation, the proxy server may provide a projection proxy service for a plurality of first terminals. This improves usage of the proxy server.

In a possible implementation, before the performing, based on the stream information of the first video stream, matching on a data stream sent by a video server to the first terminal, the method further includes:
determining a target streaming media transfer protocol based on a protocol type field in the projection proxy request message, where the target streaming media transfer protocol is a streaming media transfer protocol used by the first terminal, and different values of the protocol type field correspond to different streaming media transfer protocols; and
performing, based on the target streaming media protocol, the step of performing, based on the stream information of the first video stream, matching on a data stream sent by a video server to the first terminal.

Based on the foregoing possible implementation, the proxy server can implement adaptive and differentiated processing on videos of different streaming media transfer protocols based on the protocol type field in the projection proxy request information.

In a possible implementation, the method further includes:
receiving a video synchronization message periodically sent by the first terminal, and forwarding the video synchronization message to the second terminal, where the video synchronization message includes the stream information of the first video stream, and the video synchronization message further includes at least one of a play progress and head rotation information of the first terminal.

Based on the foregoing possible implementation, the video synchronization information is periodically sent, so that the second terminal can adjust, in real time based on the video synchronization information, a played video image, so that the video image played by the second terminal is synchronized with a video image played by the first terminal. This improves a synchronization effect.

In a possible implementation, the method further includes:
receiving a projection proxy end request message from the second terminal, where the projection proxy end request message is used to request the proxy server to end a matching process for the first video stream; and
stopping matching on the data stream sent by the video server to the first terminal.

Based on the foregoing possible implementation, a projection process may end at any time, to avoid unnecessary continuous projection, for example, unnecessary continuous projection when no one views a projected image.

According to a second aspect, a video projection method is provided, and is applied to a second terminal, the second terminal, a proxy server, and a first terminal are located in a same local area network, and the method includes:
receiving a projection request message from the first terminal, where the projection request message carries at least stream information of a first video stream that is being played by the first terminal;
sending a projection proxy request message to the proxy server, where the projection proxy request message carries at least the stream information of the first video stream that is being played by the first terminal;
receiving a second video stream sent by the proxy server, where the second video stream is obtained by replicating the first video stream received by the proxy server;
receiving a video synchronization message sent by the first terminal, where the video synchronization message includes the stream information of the first video stream, and the video synchronization message further includes either a play progress or head rotation information of the first terminal; and
performing video playing based on the video synchronization message and the second video stream.

In a possible implementation, the method further includes:
receiving a projection end request message from the first terminal; and
sending a projection proxy end request message to the proxy server, where the projection proxy end request message is used to request the proxy server to end a matching process for the first video stream.

Based on the foregoing possible implementation, a projection process may end at any time, to avoid unnecessary continuous projection, for example, unnecessary continuous projection when no one views a projected image.

According to a third aspect, a video projection apparatus is provided, configured to perform the foregoing video projection method. Specifically, the video projection apparatus includes function modules configured to perform the video projection method in any one of the first aspect or the optional manners of the first aspect, and the foregoing aspect is an aspect corresponding to a video projection method applied to a proxy server.

According to a fourth aspect, a video projection apparatus is provided, configured to perform the foregoing video projection method. Specifically, the video projection apparatus includes function modules configured to perform the video projection method in any one of the second aspect or the optional manners of the second aspect, and the foregoing aspect is an aspect corresponding to a video projection method applied to a second terminal.

According to one aspect, a computer device is provided. The computer device includes a processor and a memory. The memory stores at least one instruction, and the instruction is loaded and executed by the processor to implement operations performed in the foregoing video projection method.

According to one aspect, a computer readable storage medium is provided. The storage medium stores at least one instruction, and the instruction is loaded and executed by the processor to implement operations performed in the foregoing video projection method.

The technical solutions provided in the embodiments of the present invention bring the following beneficial effects.

The proxy server finds, from the received video stream based on the network protocol address of the first terminal and the stream information of the video stream, the video stream that is being played by the first terminal, and sends the video stream corresponding to a video that is being played by the first terminal to the second terminal, so that the second terminal can play a video indicated by the video stream, and the first terminal and the second terminal perform synchronous playing. This prevents the first terminal from sending a video stream to the second terminal, reduces network pressure and power consumption of the first terminal, and avoids a video freeze, thereby improving projection quality.

### BRIEF DESCRIPTION OF DRAWINGS

To describe the technical solutions in the embodiments of the present invention more clearly, the following briefly describes the accompanying drawings required for describing the embodiments. It is clearly that the accompanying drawings in the following description show merely some embodiments of the present invention, and a person of ordinary skill in the art may derive other drawings from these accompanying drawings without creative efforts.
FIG. 1 is a schematic diagram of a video projection implementation environment according to an embodiment of the present invention;
FIG. 2 is a schematic structural diagram of a first terminal according to an embodiment of the present invention;
FIG. 3 is a schematic structural diagram of a second terminal according to an embodiment of the present invention;
FIG. 4 is a schematic structural diagram of an apparatus of a proxy server according to an embodiment of the present invention;
FIG. 5A and FIG. 5B are a flowchart of a video projection method according to an embodiment of the present invention;
FIG. 6A and FIG. 6B are a flowchart of a video projection method according to an embodiment of the present invention;
FIG. 7A and FIG. 7B are a flowchart of a video projection method according to an embodiment of the present invention;
FIG. 8A and FIG. 8B are a flowchart of a video projection method according to an embodiment of the present invention;
FIG. 9 is a schematic structural diagram of a video projection apparatus according to an embodiment of the present invention; and
FIG. 10 is a schematic structural diagram of a video projection apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

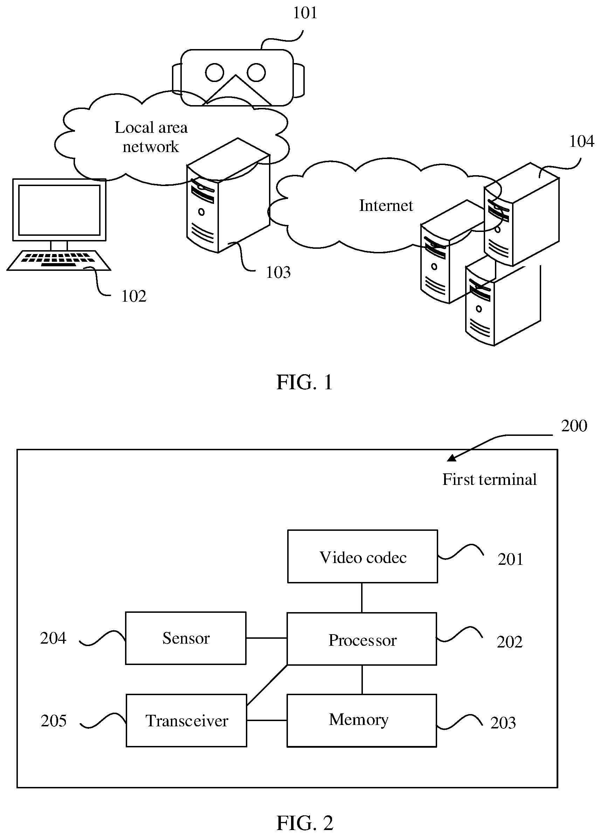

FIG. 1 is a schematic diagram of a video projection implementation environment according to an embodiment of the present invention. Referring to FIG. 1, there are a first terminal 101, a second terminal 102, a proxy server 103, and a video server 104 in the implementation environment. The first terminal 101, the second terminal 102, and the proxy server 103 are located in a same local area network. The first terminal 101 is connected to the second terminal 102, the proxy server 103, and the video server 104 through a wireless network, and the proxy server 103 may be connected to the second terminal through a network cable.

The first terminal 101 is a terminal configured to play a video, and may play a video provided by a video server of an operator. The video may be a movie, a TV series, a game video, a real-time chat video, or the like. In this embodiment of the present invention, the first terminal may serve as a projection initiator, and the video played by the first terminal may be used as a projection target. The first terminal may be a VR terminal, and is configured to play a VR video. The VR video mainly provides seamlessly-connected panoramic images centered on human eyes 180 degrees vertically and 360 degrees horizontally. When the video server 104 sends a video stream to the first terminal 101, the video server 104 pushes all 360-degree wrap-around images to the first terminal 101, and the first terminal 101 is responsible for tracking a change of a view angle of a user, and completing image projection and display in real time. The view angle is changed at any time in a VR video viewing process, and therefore, the first terminal 101 needs to periodically send a video synchronization message to the proxy server 103, so that the second terminal 102 plays, based on the video synchronization message forwarded by the proxy server 103, a video image that is being played by the first terminal 101, to implement synchronization. Certainly, the first terminal may alternatively be another terminal that can play a video. This is not specifically limited in this embodiment of the present invention. The first terminal 101 may be an all-in-one machine, or may be a user terminal of a cloud VR service of an operator. Optionally, the first terminal 101 may be VR glasses.

The second terminal 102 is a terminal capable of playing a video, and may play, based on a received video stream, a video indicated by the video stream. In this embodiment of the present invention, the second terminal 102 may be configured to perform projection display. The second terminal 102 may send a projection proxy request to the proxy server 103, and play, based on the video synchronization message periodically forwarded by the proxy server 103 and a video stream sent by the proxy server 103, the video image that is being played by the first terminal 101, to complete projection display. Certainly, the second terminal may alternatively be another terminal configured to play a video, provided that projection display can be completed. This is not specifically limited in this embodiment of the present invention. The second terminal 102 may be a user terminal of a broadband television service of an operator, for example, a set-top box.

The proxy server 103 is a unified network egress of the local area network, and may serve as a proxy server of the second terminal 102, and is responsible for forwarding, to the second terminal 102, information sent by the first terminal 101, and sending, to the second terminal 102, a found video stream that is being played by the first terminal 101, so that the second terminal 102 can send information based on information sent by the first terminal 101, and play the video image that is being played by the first terminal 101.

The video server 104 may store a video file, and is configured to send a video stream to the first terminal 101, so that the first terminal 101 can play a video indicated by the video stream. The video server 104 may be a video server, in a video server cluster of an operator, that exchanges a video stream with the first terminal. The video server cluster of the operator includes one or more scheduled video servers and a plurality of non-scheduled servers, and a same video file may be stored in the plurality of non-scheduled servers. When receiving a video stream request message from the first terminal 101, a scheduled server schedules, based on information carried in the video stream request message, a non-scheduled video server that stores a target video file and that is relatively idle, and the non-scheduled video server sends a video stream to the first terminal 101. Certainly, a video server that receives the video stream request message may alternatively be a non-scheduled server, and the non-scheduled server sends a video stream to the first terminal 101. A video server that receives the video stream request message is not specifically limited in this embodiment of the present invention.

It should be noted that the first terminal 101 needs to exchange information with the video server 104 through a network egress of the proxy server. To be specific, a device in a local area network needs to exchange information with a server or a device in an external network through the network egress of the proxy server 103. For example, when the video server 104 pushes a video stream to the first terminal 101, the video stream needs to be transmitted through a network connection of the proxy server 103.

In addition, the first terminal 101 and the video server 104 support a streaming media transfer protocol. The streaming media transfer protocol may be the hypertext transfer protocol live streaming (hypertext transfer protocol live streaming, HLS), or may be the real-time streaming media transport protocol RTP, or may be another streaming media transfer protocol. This is not specifically limited in this embodiment of the present invention.

In the implementation environment provided in this embodiment of the present invention, the first terminal, the second terminal, and the proxy server are configured in a same local area network. The proxy server serves as an information transfer medium between the first terminal and the second terminal, and may periodically forward the video synchronization message from the first terminal to the second terminal, so that the second terminal and the first terminal can synchronously play a same video image.

The foregoing briefly describes the implementation environment of the video projection method provided in the present invention and each participating device. The following describes hardware implementations of the terminals and the proxy server in FIG. 1.

FIG. 2 is a schematic structural diagram of a first terminal according to an embodiment of the present invention. The first terminal 200 may vary greatly due to different configurations or performance, and may include one or more video codecs 201, one or more processors (central processing units, CPU) 202, one or more memories 203, one or more sensors 204, and a transceiver 205. The video codec 201 may decode a digital video stored in the memory 203. The memory 203 stores at least one instruction, and the at least one instruction is loaded and executed by the processor 202 to implement the method performed on a first terminal side in the following method embodiments. The sensor 204 may obtain head rotation information of a user. The transceiver may be a component such as a wired or wireless network interface, a keyboard, and an input/output interface, to perform input/output. The first terminal may further include another component configured to implement a device function. Details are not described herein. Certainly, the first terminal has a display component such as a display, and is configured to display an image output by the video codec 201.

In an example embodiment, a computer readable storage medium is further provided, for example, a memory including an instruction, and the instruction may be executed by the processor in the first terminal to complete the video projection method in the following embodiments. For example, the computer readable storage medium may be a read-only memory image (read-only memory image, ROM), a random access memory (random access memory, RAM), a compact disc read-only memory (compact disc read-only memory, CD-ROM), a magnetic tape, a floppy disk, or an optical data storage device.

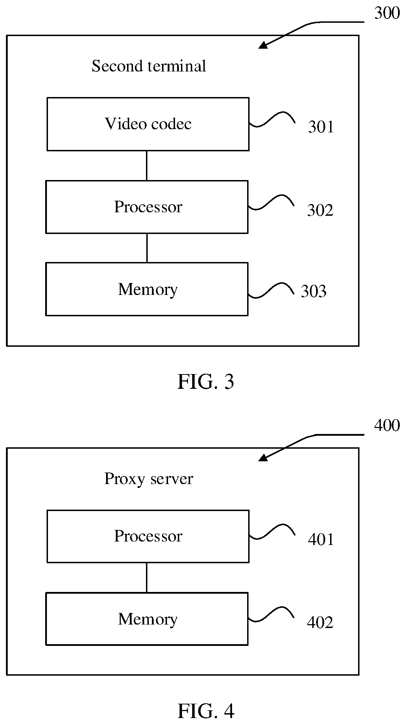

FIG. 3 is a schematic structural diagram of a second terminal according to an embodiment of the present invention. The second terminal 300 may vary greatly due to different configurations or performance, and may include one or more video codecs 301, one or more processors 302, and one or more memories 303. The video codec 301 may compress and decompress a digital video stored in the memory 303. The memory 303 stores at least one instruction, and the at least one instruction is loaded and executed by the processor 302 to implement the method provided in the following method embodiments. Certainly, the second terminal may further include a component such as a wired or wireless network interface, a keyboard, and an input/output interface, to perform input/output. The second terminal may further include another component configured to implement a device function. Details are not described herein. Certainly, the first terminal has a display component such as a display, configured to display an image output by the video codec 301.

In an example embodiment, a computer readable storage medium is further provided, for example, a memory including an instruction, and the instruction may be executed by the processor in the second terminal to complete the video projection method in the following embodiments. For example, the computer readable storage medium may be a ROM, a random access memory (RAM), a CD-ROM, a magnetic tape, a floppy disk, or an optical data storage device.

FIG. 4 is a schematic structural diagram of a proxy server according to an embodiment of the present invention. The server 400 may vary greatly due to different configurations or performance, and may include one or more processors 401 and one or more memories 402. The memory 402 stores at least one instruction, and the at least one instruction is loaded and executed by the processor 401 to implement the method provided in the following method embodiments. Certainly, the server may further include a component such as a wired or wireless network interface, a keyboard, and an input/output interface, to perform input/output. The server may further include another component configured to implement a device function. Details are not described herein.

In an example embodiment, a computer readable storage medium is further provided, for example, a memory including an instruction, and the instruction may be executed by the processor in the proxy server to complete the video projection method in the following embodiments. For example, the computer readable storage medium may be a ROM, a random access memory (RAM), a CD-ROM, a magnetic tape, a floppy disk, or an optical data storage device.

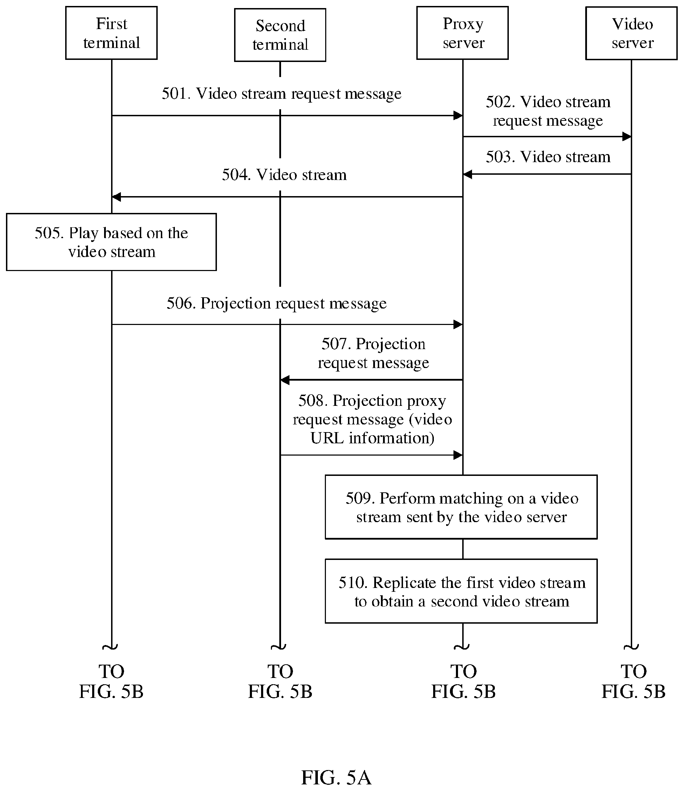

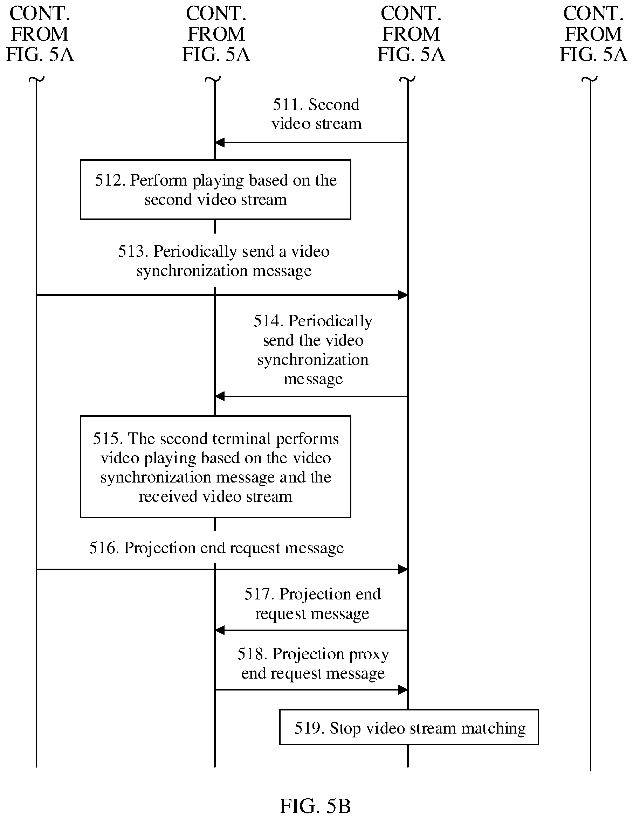

The first terminal and the proxy server may support a same streaming media transfer protocol by default. For example, when both the first terminal and the proxy server support the HLS protocol, when receiving a video stream from the video server, the proxy server may directly parse and match the video stream by using the HLS protocol in a parsing process. The following describes, by using an example in which both the first terminal and the proxy server support the HLS protocol, the video projection method provided in the embodiments of the present invention. FIG. 5A and FIG. 5B are a flowchart of a video projection method according to an embodiment of the present invention. This embodiment may be performed in the implementation environment shown in FIG. 1. Referring to FIG. 5A and FIG. 5B, this embodiment includes the following steps.

501. When receiving a video play instruction, a first terminal sends a video stream request message to a proxy server. The video stream request message carries video URL information.

The video play instruction may be triggered by a play operation of a user on a video on the first terminal. The play operation may be a game start operation and a video play start operation. This is not limited in this embodiment of the present invention. The video stream request message is used to request a video stream corresponding to the video URL information from a video server, and return the video stream to the first terminal.

A value of a message type field in the video stream request message may be a first character string, and the first character string is used to indicate that the message is a video stream request message. It should be noted that the terms such as "first" and "second" in this embodiment of the present invention are not used to distinguish content of a specific field or a character string, but are only used to distinguish fields or character strings in different requests.

502. After receiving the video stream request message, the proxy server sends the video stream request message to the video server.

It should be noted that in a current phase, the proxy server is configured only to forward a received message, and the received message may be a message sent by the first terminal, or may be a message sent by the video server.

503. The video server sends a video stream to the proxy server based on the video stream request message.

In this embodiment of the present invention, the video server may obtain, based on the video URL information of the video stream request message, the video stream corresponding to the video URL information.
504. After receiving the video stream, the proxy server sends the video stream to the first terminal.
505. The first terminal performs playing based on the received video stream.

Steps 501 to 505 describe packet exchange between the first terminal and the video server. In this process, all packets exchanged between the first terminal and the proxy server are forwarded through the proxy server. When the first terminal performs video playing based on the video stream, the user may initiate a projection operation on the first terminal, to synchronize a currently played video to another terminal for playing, thereby implementing projection.

506. When receiving a projection instruction, the first terminal sends a projection request message to the proxy server. The projection request message carries at least the video URL information.

Certainly, the projection request message may further carry information about a second terminal, for example, a network protocol address of the second terminal or an identifier of the second terminal, to determine a target device for projection.

A value of a message type field in the projection request message may be a second character string, the second character string is used to indicate that the message is a projection request message, and the projection request message is used to request to project a video stream that is being played by the first terminal to the second terminal.

It should be noted that, in this embodiment of the present invention, an example in which the first terminal is a VR terminal is used for description. In this case, the projection request message may further carry head rotation information. The head rotation information is used to indicate a current head rotation status of the user of the first terminal, so that the second terminal plays, based on the head rotation information, a video image synchronized with the first terminal. For details, refer to steps 512 and 515. Certainly, the first terminal may not need to add the head rotation information to the projection request message.

507. After receiving the projection request message, the proxy server sends the projection request message to the second terminal.

Both step 505 and step 507 are implemented by using a local forwarding function provided by the proxy server for a device in a local area network. Details are not described in this embodiment of the present invention.

It should be noted that in a current phase, the proxy server is configured only to forward a received message, and the received message may be a message sent by the first terminal, or may be a message sent by the video server.

508. The second terminal sends a projection proxy request message to the proxy server based on the received projection request message. The projection proxy request message carries at least the video URL information.

For stream information of the video stream, the stream information may include the video URL information. Certainly, the stream information may further include a network protocol address of the first terminal, so that the proxy server performs matching based on the video URL information and the network protocol address of the first terminal.

A value of a message type field in the projection proxy request message may be a third character string, the third character string is used to indicate that the message is a projection proxy request message, and the projection proxy request message is used to request the proxy server to project the video stream that is being played by the first terminal to the second terminal.

It may be learned from steps 505 to 508 that, in this projection process, the first terminal does not need to send a video stream to the second terminal, but a video stream obtaining process is transferred to the proxy server, to reduce network pressure and power consumption of the first terminal.

509. The proxy server performs, based on the network protocol address of the first terminal and the video URL information of the first video stream, matching on a video stream sent by the video server. The video server is configured to provide the first video stream.

Because the proxy server can receive the video stream sent by the video server, after the proxy server receives the projection proxy request message, the proxy server may parse the received video stream to obtain a network protocol address of a target device of the video stream and video URL information, and compare the network protocol address of the first terminal and the video URL information of the first video stream with the network protocol address and the video URL information that are obtained through parsing. When the network protocol address of the first terminal and the video URL information of the first video stream are the same as the network protocol address and the video URL information that are obtained through parsing, it indicates that the first video stream is found.

510. When finding the first video stream, the proxy server replicates the first video stream to obtain a second video stream.

It should be noted that, when the proxy server starts to monitor data exchange between the first terminal and the video server, the proxy server may store the video stream sent by the video server to the first terminal. There is a mapping relationship between the video URL information of the video stream and a data packet of the video stream. Therefore, the proxy server may obtain, based on the video URL information, the video stream indicated by the video URL information.

Therefore, that the proxy server replicates the first video stream is that the proxy server replicates, based on the mapping relationship, the video stream indicated by the video URL information.

It should be noted that, the second video stream is a video stream obtained through replication by the proxy server. The terms such as "first" and "second" in this embodiment of the present invention are not used to distinguish content of the video stream, but are only used to distinguish an original video stream from a video stream obtained through replication.

511. The proxy server sends the second video stream to the second terminal.

The second video stream is used for video playing on the second terminal.

The replication and forwarding in steps 510 and 511 can be real-time replication and real-time forwarding, to ensure a small delay and a smooth projection process.

512. After receiving the second video stream, the second terminal performs playing based on the second video stream.

It should be noted that, in this embodiment of the present invention, when performing video playing based on the second video stream, the second terminal further needs to consider the head rotation information, to ensure that a video image played by the second terminal is consistent with a video image that is being played by the first terminal. Therefore, after initiating projection, the first terminal may send a video synchronization message from the first terminal to the second terminal, so that when starting video playing, the second terminal can directly perform synchronous playing based on the video synchronization message. The video synchronization message includes stream information of the first video stream, a play progress, and the head rotation information of the first terminal.

513. The first terminal periodically sends the video synchronization message to the proxy server. The video synchronization message includes the stream information of the first video stream, and the video synchronization message further includes at least one of the play progress and the head rotation information of the first terminal.

In addition to the stream information, the video synchronization message may further include the following information content: the play progress and the head rotation information of the first terminal; only the play progress; or only the head rotation information of the first terminal. Any one of the foregoing information content is not limited in this embodiment of the present invention.

Because a head rotation message of a VR video may change at any time in a play process, and pause, fast forward, or rewind may occur when the first terminal plays a video, the first terminal may periodically send the video synchronization message, so that the second terminal can adjust a played image at any time based on the received video stream and based on content in the synchronization information forwarded by the proxy server. Therefore, the video played by the second terminal is synchronized with the video played by the first terminal. To implement synchronous video playing, a period in which the first terminal sends the synchronization message to the proxy server may be very short, and the period may be at a millisecond level.
514. After receiving the video synchronization message, the proxy server sends the video synchronization message to the second terminal.
515. The second terminal performs video playing based on the video synchronization message and the received video stream.

The second terminal may determine, based on the information (for example, the head rotation information and the play progress) carried in the video synchronization message and the received video stream, the image that is being played by the first terminal, so that the second terminal synchronously plays the video that is being played by the first terminal, and the second terminal and the first terminal implement synchronous playing, to implement projection.

It should be noted that, after the second terminal periodically receives the video synchronization message, the second terminal periodically adjusts, based on the received video synchronization message, a video image to be played, to keep synchronous with a video image played by the first terminal.

When a play state of the first terminal is changed to fast-forward, rewind, or pause, a changed play state may be carried in the video synchronization message. For example, the changed play state may be carried in a play progress field. When the second terminal learns, based on the video synchronization message, that the play state of the first terminal is changed, the second terminal may send a projection proxy request message to the proxy server again, so that the proxy server can find again a video stream that is being played by the first terminal, replicate the found video stream, and send a video stream obtained through replication to the second terminal. Therefore, the video played by the second terminal is synchronized with the video played by the first terminal. In other words, the process of step 508 to step 515 is performed again.

516. When receiving a projection end instruction, the first terminal sends a projection end request message to the proxy server.

The projection end instruction may be triggered by an end operation of the user, for example, triggered when the user exits a video play application or a game application. This embodiment of the present invention does not limit how to specifically trigger the projection end instruction. The projection end request message is used to indicate the second terminal to stop projection.

A value of a message type field in the projection end request message may be a fourth character string, the fourth character string is used to indicate that the message is a projection end request message, and the projection end request message is used to request the proxy server to end projection.

517. After receiving the projection end request message, the proxy server sends the projection end request message to the second terminal.

The steps 516 and 517 are a process in which the proxy server forwards a message to a device in the local area network. Details are not described herein again.

518. The second terminal sends a projection proxy end request message to the proxy server based on the projection end request message. The projection proxy end request message is used to request the proxy server to end a matching process for the first video stream.

The projection proxy end request message carries the network protocol address of the first terminal. A value of a message type field in the projection proxy end request message may be a fifth character string, the fifth character string is used to indicate that the message is a projection proxy end request message, and the projection proxy end request message is used to request the proxy server to end projection.

519. The proxy server receives the projection proxy end request message, and stops video stream matching.

When receiving the projection proxy end request message, the proxy server may stop parsing the video stream sent by the video server, and does not perform video stream matching. Therefore, the proxy server no longer sends the second video stream to the second terminal, and projection of the first terminal on the second terminal ends.

According to the projection method provided in this embodiment of this application, the proxy server finds, from the received video stream based on the network protocol address of the first terminal and the video URL information, the video stream that is being played by the first terminal, and sends the video stream corresponding to the video that is being played by the first terminal to the second terminal, so that the second terminal can play a video indicated by the video stream, and the first terminal and the second terminal perform synchronous playing. This prevents the first terminal from sending a video stream to the second terminal, reduces network pressure and power consumption of the first terminal, and avoids a video freeze, thereby improving projection quality. Further, the first terminal periodically sends the video synchronization message, so that the second terminal can play, based on the video synchronization message, the video that is being played by the first terminal, thereby improving a synchronization effect.

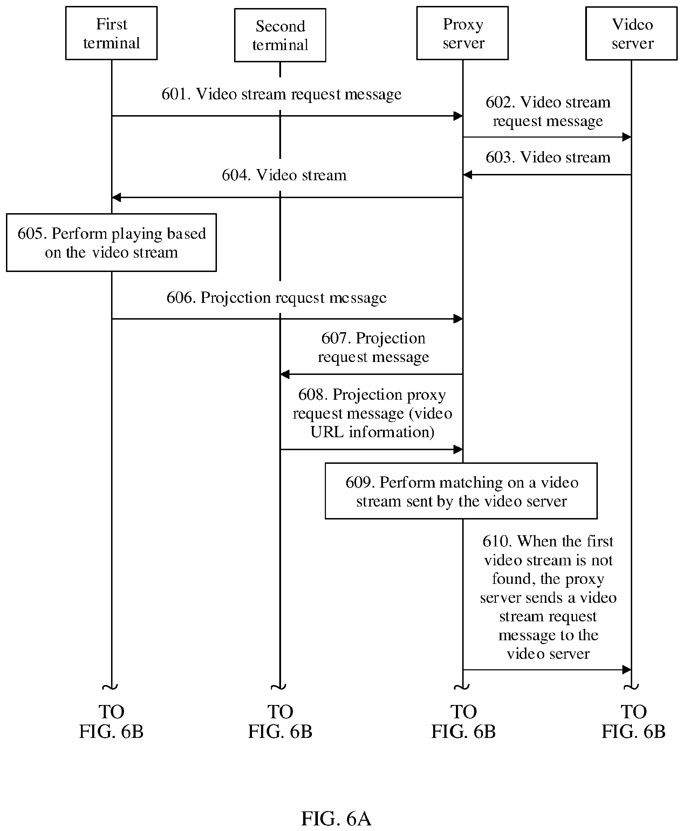

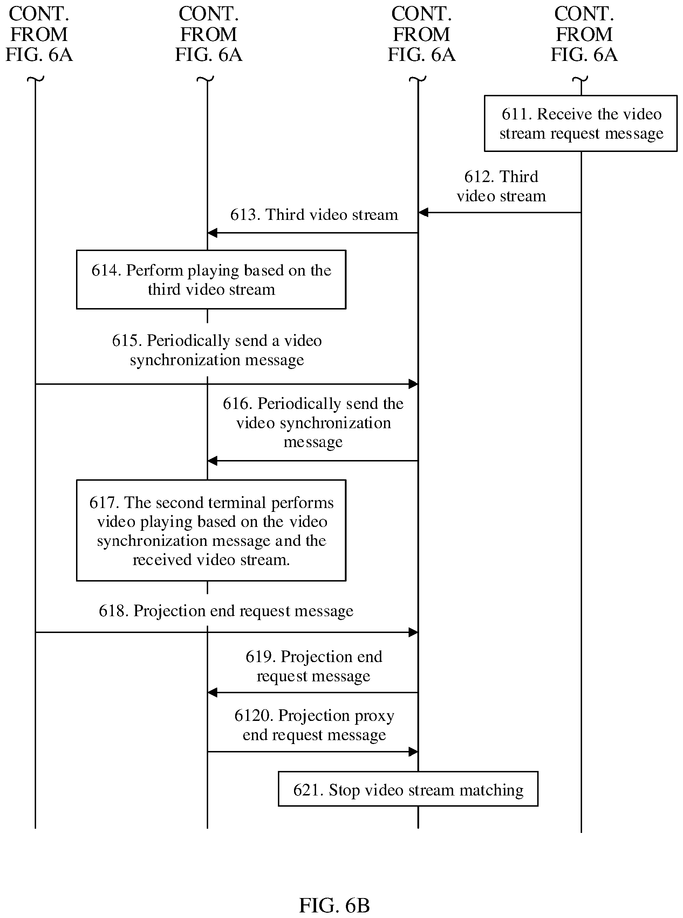

The foregoing embodiment is described by using an example in which both the first terminal and the proxy server support the HLS protocol, and the proxy server can find the first video stream. However, when both the first terminal and the proxy server support the HLS protocol, the proxy server may fail to find the first video stream. In this case, the present invention provides a video projection method, as shown in FIG. 6A and FIG. 6B.

FIG. 6A and FIG. 6B are a flowchart of a video projection method according to an embodiment of the present invention. This embodiment may be performed in the implementation environment shown in FIG. 1. Referring to FIG. 6A and FIG. 6B, this embodiment includes the following steps.
601. When receiving a video play instruction, a first terminal sends a video stream request message to a proxy server. The video stream request message carries video URL information.
602. After receiving the video stream request message, the proxy server sends the video stream request message to a video server.
603. The video server sends a video stream to the proxy server based on the video stream request message.
604. After receiving the video stream, the proxy server sends the video stream to the first terminal.
605. The first terminal performs playing based on the received video stream.
606. When receiving a projection instruction, the first terminal sends a projection request message to the proxy server. The projection request message carries at least the video URL information.
607. After receiving the projection request message, the proxy server sends the projection request message to a second terminal.
608. The second terminal sends a projection proxy request message to the proxy server based on the received projection request message. The projection proxy request message carries at least the video URL information.
609. The proxy server matches, based on a network protocol address of the first terminal and the video URL information of the first video stream, a video stream sent by the video server. The video server is configured to provide the first video stream.
610. When the proxy server does not find the first video stream based on the projection request message, the proxy server sends a video stream request message to the video server. The video stream request message carries the video URL information.

A value of a message type field in the video stream request message may be a third character string, the third character string is used to indicate that the message is a video stream request message, and the video stream request message is used to request a video stream from the video server.

Based on the matching in step 609, the proxy server cannot find the first video stream. Because the first terminal uses the HLS protocol, the first terminal may have stored some video segments. However, because the video URL information changes constantly, based on video URL information carried in a current projection proxy request message, the video segments cannot be found in data received after the proxy server starts proxy. Therefore, the proxy server needs to download corresponding video stream data from the video server.

It should be noted that the proxy server may further store any received video stream in a working process, so that the proxy server can perform matching based on prestored data when receiving the projection proxy request message. Certainly, only a video stream within preset duration may be stored each time. For example, only video streams received within the last 5 seconds are stored. Video streams that are received before 5 minutes are deleted according to the first in first out principle.
611. The video server receives the video stream request message.
612. After receiving the video stream request message, the video server sends a third video stream to the proxy server.

The third video stream is a video stream obtained by the video server based on the video URL information sent by the proxy server. In addition, the third video stream is a video stream that is being played by the first terminal.

613. After receiving the third video stream, the proxy server sends the third video stream to the second terminal. The third video stream is used for video playing on the second terminal.

It should be noted that the third video stream may be stored in the proxy server based on a mapping relationship between video URL information and a data packet of a video stream.

Steps 609 to 613 are steps performed by the proxy server when the proxy server cannot find the first video stream based on the stored video URL information. By using these steps, the proxy server can obtain some video segments downloaded by the first terminal, to avoid asynchronous projection caused by a data loss. This improves a projection effect and projection quality.
614. After receiving the third video stream, the second terminal performs playing based on the third video stream.
615. The first terminal periodically sends a video synchronization message to the proxy server. The video synchronization message includes stream information of the first video stream, and the video synchronization message further includes either a play progress or head rotation information of the first terminal.
616. After receiving the video synchronization message, the proxy server sends the video synchronization message to the second terminal.
617. The second terminal performs video playing based on the video synchronization message and the received video stream.
618. When receiving a projection end instruction, the first terminal sends a projection end request message to the proxy server.
619. After receiving the projection end request message, the proxy server sends the projection end request message to the second terminal.
620. The second terminal sends a projection proxy end request message to the proxy server based on the projection end request message. The projection proxy end request message is used to request the proxy server to end a matching process for the first video stream.
621. The proxy server receives the projection proxy end request message, and stops video stream matching.

According to the projection method provided in this embodiment of this application, the proxy server may request, from the video server based on the video URL information and a network protocol address of the video server, the video stream that is being played by the first terminal, and send the video stream obtained based on the request to the second terminal, so that the second terminal can play a video indicated by the video stream, and the first terminal and the second terminal can implement synchronous playing. This avoids asynchronous projection caused because the proxy server cannot find the video stream that is being played by the first terminal. In addition, the first terminal is prevented from sending a video stream to the second terminal, to reduce network pressure and power consumption of the first terminal, and avoid a video freeze. This improves projection quality. Further, the first terminal periodically sends the video synchronization message, so that the second terminal can play, based on the video synchronization message, the video that is being played by the first terminal, thereby improving a synchronization effect.

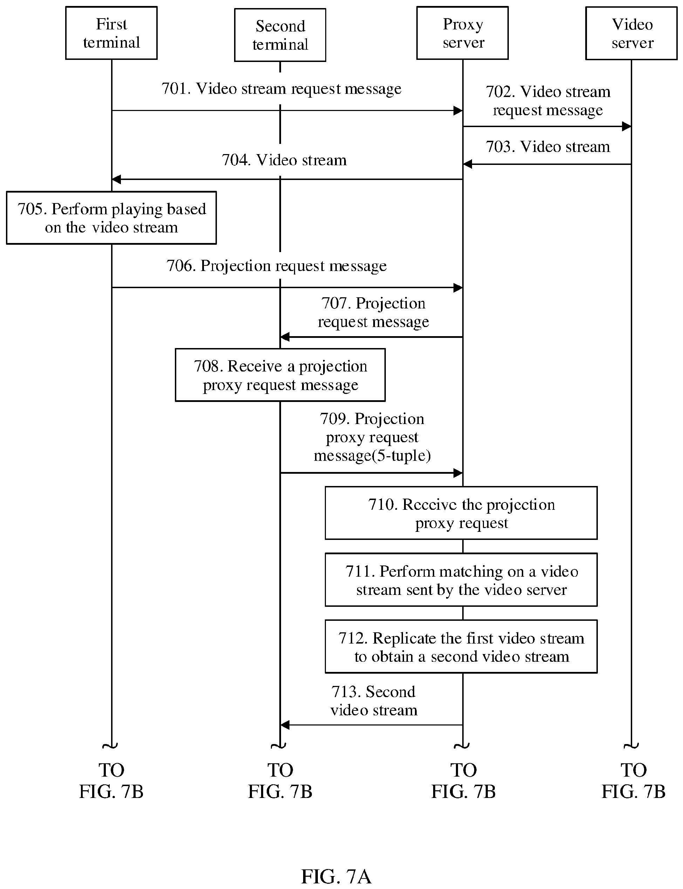

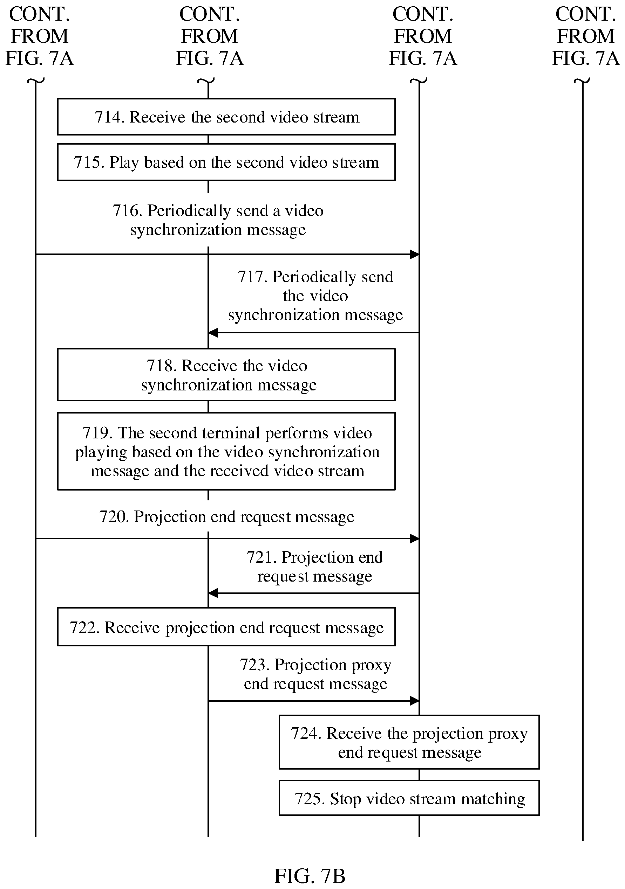

The foregoing embodiments are described by using an example in which the first terminal and the proxy server in the local area network support the HLS protocol by default. In some embodiments, for example, both the first terminal and the proxy server support the RTP protocol by default. The following describes, by using an example in which both the first terminal and the proxy server support the RTP protocol, a video projection method provided in an embodiment of the present invention. A main difference from the embodiment shown in FIG. 5A and FIG. 5B are lies in that information that is carried in an exchanged message and that is used to indicate a video that is being played by the first terminal is a 5-tuple. FIG. 7A and FIG. 7B are a flowchart of a video projection method according to an embodiment of the present invention. This embodiment may be performed in the implementation environment shown in FIG. 1. Referring to FIG. 7A and FIG. 7B, this embodiment includes the following steps.
701. When receiving a video play instruction, a first terminal sends a video stream request message to a proxy server. The video stream request message carries video URL information.
702. After receiving the video stream request message, the proxy server sends the video stream request message to a video server.
703. The video server sends a video stream to the proxy server based on the video stream request message.
704. After receiving the video stream, the proxy server sends the video stream to the first terminal.
705. The first terminal performs playing based on the received video stream.
706. When receiving a projection instruction, the first terminal sends a projection request message to the proxy server. The projection request message carries a 5-tuple of the first video stream.
707. After receiving the projection request message, the proxy server sends the projection request message to a second terminal.
708. The second terminal receives the projection request.
709. The second terminal sends a projection proxy request message to the proxy server based on the received projection request message. The projection proxy request message carries the 5-tuple of the first video stream.
710. The proxy server receives the projection proxy request.
711. The proxy server performs, based on the 5-tuple of the first video stream, matching on a data stream sent by the video server. The video server is configured to provide the first video stream.

Because the proxy server can receive the video stream sent by the video server, after the proxy server receives the projection proxy request message, the proxy server may parse the received video stream to obtain a 5-tuple of the video stream, and compare the 5-tuple of the first video stream in the projection proxy request message with the 5-tuple obtained through parsing. When the 5-tuple is the same as the 5-tuple obtained through parsing, it indicates that the first video stream is found.
712. When finding the first video stream, the proxy server replicates the first video stream to obtain a second video stream.
713. The proxy server sends the second video stream to the second terminal.
714. The second terminal receives the second video stream.
715. After receiving the second video stream, the second terminal performs playing based on the second video stream.
716. The first terminal periodically sends a video synchronization message to the proxy server. The video synchronization message includes stream information of the first video stream, and the video synchronization message further includes either a play progress or head rotation information of the first terminal.
717. After receiving the video synchronization message, the proxy server sends the video synchronization message to the second terminal.
718. The second terminal receives the video synchronization message.
719. The second terminal performs video playing based on the video synchronization message and the received video stream.
720. When receiving a projection end instruction, the first terminal sends a projection end request message to the proxy server.
721. After receiving the projection end request message, the proxy server sends the projection end request message to the second terminal.
722. The second terminal receives the projection end request message.
723. The second terminal sends a projection proxy end request message to the proxy server based on the projection end request message. The projection proxy end request message is used to request the proxy server to end a matching process for the first video stream.
724. The proxy server receives the projection end request message.
725. After receiving the projection proxy end request message, the proxy server stops video stream matching.

Steps 701 to 725 are similar to steps 601 to 621. A main difference lies in that information that is carried in an exchanged message and that is used to indicate the video that is being played by the first terminal is a 5-tuple, and other steps are not limited.

According to the projection method provided in this embodiment of this application, the proxy server finds, from the received video stream based on the 5-tuple, the video stream that is being played by the first terminal, and sends the video stream corresponding to the video that is being played by the first terminal to the second terminal, so that the second terminal can play a video indicated by the video stream, and the first terminal and the second terminal perform synchronous playing. This prevents the first terminal from sending a video stream to the second terminal, reduces network pressure and power consumption of the first terminal, and avoids a video freeze, thereby improving projection quality. Further, the first terminal periodically sends the video synchronization message, so that the second terminal can play, based on the video synchronization message, the video that is being played by the first terminal, thereby improving a synchronization effect.

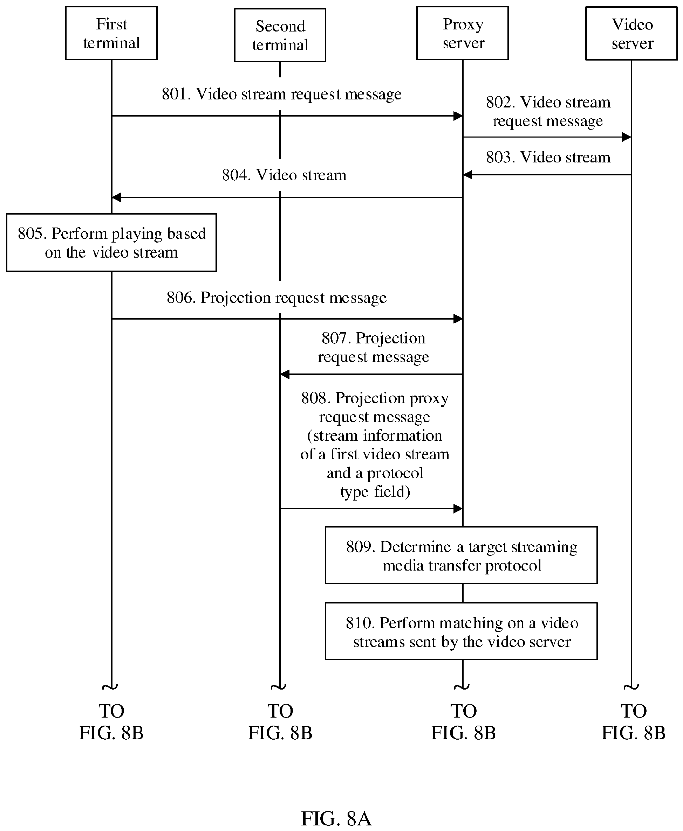

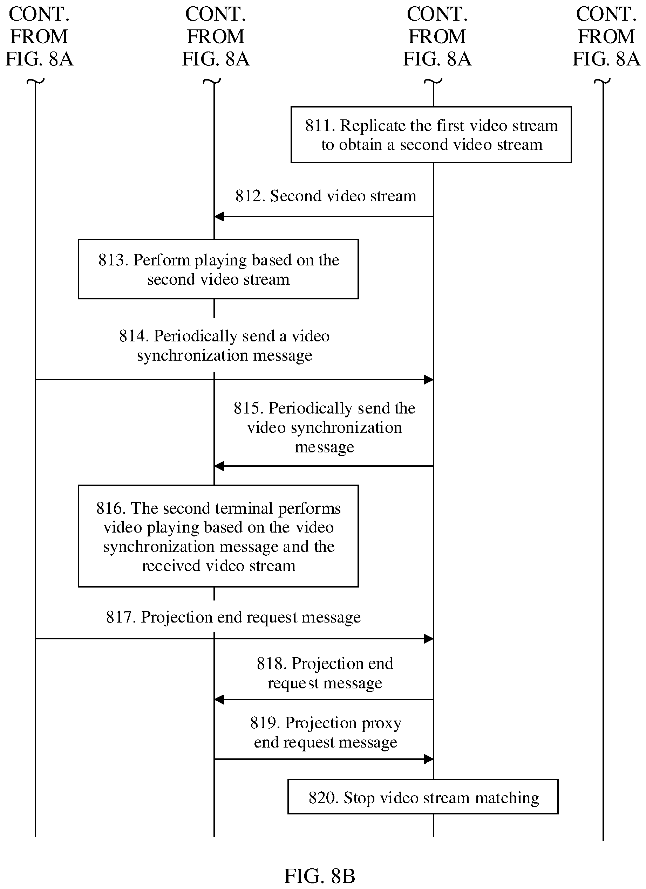

The foregoing embodiments are described by using an example in which the first terminal and the proxy server in the local area network support the HLS protocol or the RTP protocol by default. However, in some embodiments, the first terminal may support both the HLS protocol and the RTP protocol, and may use either of the protocols during data exchange with the video server. Therefore, the proxy server may identify a supported protocol by using a message sent by the first terminal, to implement video stream matching. FIG. 8A and FIG. 8B are a flowchart of a video projection method according to an embodiment of the present invention. This embodiment may be performed in the implementation environment shown in FIG. 1. Referring to FIG. 8A and FIG. 8B, this embodiment includes the following steps.
801. When receiving a video play instruction, a first terminal sends a video stream request message to a proxy server. The video stream request message carries video URL information.
802. After receiving the video stream request message, the proxy server sends the video stream request message to a video server.
803. The video server sends a video stream to the proxy server based on the video stream request message.
804. After receiving the video stream, the proxy server sends the video stream to the first terminal.
805. The first terminal performs playing based on the received video stream.
806. When receiving a projection instruction, the first terminal sends a projection request message to the proxy server. The projection request message carries at least a protocol type field and stream information of a first video stream that is being played by the first terminal, and the protocol type field is used to indicate a streaming media transfer protocol used by the first terminal.

The first terminal may determine a value of the protocol type field based on the streaming media transfer protocol supported by the first terminal, and different values of the protocol type field correspond to different streaming media transfer protocols.

For example, when a value of the protocol type field is 0, it indicates that the streaming media transfer protocol used by the first terminal is the HLS protocol. When a value of the protocol type field is 1, it indicates that the streaming media transfer protocol used by the first terminal is the RTP protocol. Certainly, the protocol type field may also be represented in a form such as another value or a character string. This is not specifically limited in this embodiment of the present invention.
807. After receiving the projection request message, the proxy server sends the projection request message to a second terminal.
808. The second terminal sends a projection proxy request message to the proxy server based on the received projection request message. The projection proxy request message carries at least the protocol type field and the stream information of the first video stream that is being played by the first terminal.
809. The proxy server determines a target streaming media transfer protocol based on the protocol type field in the projection proxy request message. The target streaming media transfer protocol is the streaming media transfer protocol used by the first terminal, and different values of the protocol type field correspond to different streaming media transfer protocols.

It can be learned from step 806 that the protocol type field may indicate the streaming media transfer protocol supported by the first terminal. For example, when the protocol type field is 0, the streaming media transfer protocol used by the first terminal is the HLS protocol. When the protocol type field is 1, the streaming media transfer protocol used by the first terminal is the RTP protocol.

810. The proxy server performs, based on the target streaming media transfer protocol, matching on a video stream sent by the video server. The video server is configured to provide the first video stream.

It should be noted that, in step 810, when the target streaming media transfer protocol is determined, the proxy server may extract stream information corresponding to the target streaming media transfer protocol from the projection proxy request message, parse the received video stream by using the target streaming media transfer protocol, and compare flow information obtained through parsing with the extracted stream information, to perform the foregoing matching process.

For example, after the proxy server receives the projection proxy request message, when the protocol type field is 0, it indicates that the streaming media transfer protocol used by the first terminal is the HLS protocol. The stream information of the first video stream is a network protocol address of the first terminal and video URL information. The proxy server may parse the received video stream to obtain a network protocol address of a target device of the video stream and video URL information, and compare the network protocol address of the first terminal and the video URL information of the first video stream with the network protocol address and the video URL information that are obtained through parsing. When the network protocol address of the first terminal and the video URL information of the first video stream are the same as the network protocol address and the video URL information that are obtained through parsing, it indicates that the first video stream is found.

After the proxy server receives the projection proxy request message, when the protocol type field is 1, it indicates that the streaming media transfer protocol used by the first terminal is the RTP protocol, in other words, it indicates that the stream information of the first video stream is a 5-tuple. The proxy server may parse the received video stream, to obtain a 5-tuple of the video stream, and compare the 5-tuple in the projection proxy request message with the 5-tuple obtained through parsing. When the 5-tuple is the same as the 5-tuple obtained through parsing, it indicates that the first video stream is found.
811. When finding the first video stream, the proxy server replicates the first video stream to obtain a second video stream.
812. The proxy server sends the second video stream to the second terminal.
813. After receiving the second video stream, the second terminal performs playing based on the second video stream.
814. The first terminal periodically sends a video synchronization message to the proxy server. The video synchronization message includes the stream information of the first video stream, and the video synchronization message further includes either a play progress or head rotation information of the first terminal.
815. After receiving the video synchronization message, the proxy server periodically sends the video synchronization message to the second terminal.
816. The second terminal performs video playing based on the video synchronization message and the received video stream.
817. When receiving a projection end instruction, the first terminal sends a projection end request message to the proxy server.
818. After receiving the projection end request message, the proxy server sends the projection end request message to the second terminal.
819. The second terminal sends a projection proxy end request message to the proxy server based on the projection end request message. The projection proxy end request message is used to request the proxy server to end a matching process for the first video stream.
820. After receiving the projection proxy end request message, the proxy server stops video stream matching.

It should be noted that when the streaming media transfer protocol used by the first terminal is the HLS protocol, at an early proxy stage, the proxy server may fail to find the first video stream because a video fragment stored in the first terminal is not downloaded. To avoid asynchronous projection caused by a data loss, steps 610 to 612 need to be performed, so that the second terminal can play a third video stream.

According to the projection method provided in this embodiment of this application, the proxy server finds, from the received video stream based on the network protocol address of the first terminal and video stream information, the video stream that is being played by the first terminal, and sends the video stream corresponding to a video that is being played by the first terminal to the second terminal, so that the second terminal can play a video indicated by the video stream, and the first terminal and the second terminal perform synchronous playing. This prevents the first terminal from sending a video stream to the second terminal, reduces network pressure and power consumption of the first terminal, and avoids a video freeze, thereby improving projection quality. Further, the first terminal periodically sends the video synchronization message, so that the second terminal can play, based on the video synchronization message, the video that is being played by the first terminal, thereby improving a synchronization effect. In addition, the proxy server can implement adaptive and differentiated processing on videos of different streaming media transfer protocols based on the protocol type field in the projection proxy request information by using different parsing policies.

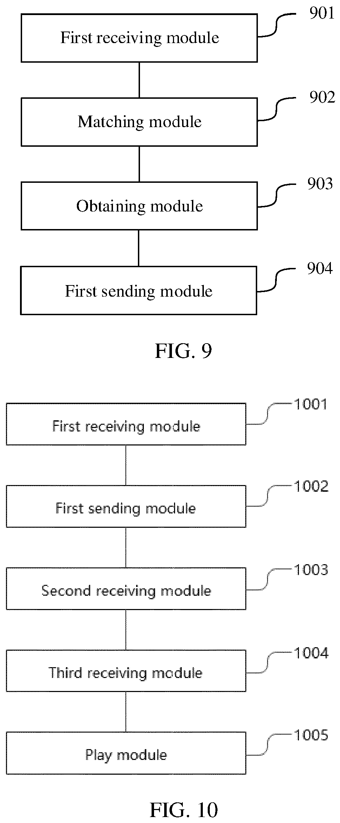

FIG. 9 is a schematic structural diagram of a video projection apparatus according to an embodiment of the present invention. The apparatus includes a first receiving module 901, a matching module 902, an obtaining module 903, and a first sending module 904.

The first receiving module 901 is configured to perform step 710.

The matching module 902 is configured to perform step 711.

The obtaining module 903 is configured to perform step 712.

The first sending module 904 is configured to perform step 713.

Optionally, the first video stream is an RTP stream, and stream information of the first video stream includes a 5-tuple. For details, refer to step 706.

Optionally, the stream information of the first video stream includes video URL information. For details, refer to step 606.

Optionally, the apparatus further includes:
a second sending module, configured to perform step 610;
a second receiving module, configured to perform step 611; and
a third sending module, configured to perform step 612.

Optionally, the stream information of the first video stream further includes a network protocol address of the first terminal.

Optionally, the apparatus further includes:
a determining module, configured to perform step 809; and
an execution module, configured to perform step 810.

Optionally, the apparatus further includes:
a third receiving module, configured to perform step 717.

Optionally, the apparatus further includes:
a fourth receiving module, configured to perform step 724; and
a stopping module, configured to perform step 725.

FIG. 10 is a schematic structural diagram of a video projection apparatus according to an embodiment of the present invention. The apparatus includes a first receiving module 1001, a first sending module 1002, a second receiving module 1003, a third receiving module 1004, and a play module 1005.

The first receiving module 1001 is configured to perform step 708.

The first sending module 1002 is configured to perform step 709.

The second receiving module 1003 is configured to perform step 714.

The third receiving module 1004 is configured to perform step 718.

The play module 1005 is configured to perform step 719.

Optionally, the first video stream is an RTP stream, and stream information of the first video stream includes a 5-tuple. For details, refer to step 706.

Optionally, the stream information of the first video stream includes video URL information. For details, refer to step 606.

Optionally, the stream information of the first video stream further includes a network protocol address of the first terminal.

Optionally, a protocol type field in the projection proxy request message is used to indicate a streaming media transfer protocol used by the first terminal. For details, refer to step 809.

Optionally, the apparatus further includes:
a fourth receiving module, configured to perform step 722; and
a second sending module, configured to perform step 723.

All the foregoing optional technical solutions may be randomly combined to form optional embodiments of this disclosure, and details are not described herein.

It should be noted that when the video projection apparatus provided in the foregoing embodiments projects a video, division into the foregoing function modules is used only as an example for description. In actual application, allocation of the foregoing functions as required may be completed by different function modules, that is, an internal structure of the apparatus is divided into different function modules to complete all or some of the described functions. In addition, the video projection apparatus provided in the foregoing embodiments is based on a same inventive concept as the embodiments illustrating the video projection method. For a specific implementation process, refer to the method embodiments. Details are not repeatedly described herein.

The foregoing descriptions are merely examples of embodiments of the present invention, but are not intended to limit the present invention.

## Claims

1. A video projection method, applied to a proxy server (103), wherein the proxy server, a first terminal (101), and a second terminal (102) are located in a same local area network, the proxy server is a unified network egress of the local area network, and the method comprises:
receiving (508), at the proxy server, a projection proxy request message from the second terminal, wherein the projection proxy request message carries at least stream information of a first video stream that is being played by the first terminal;
performing (509), by the proxy server, based on the stream information of the first video stream, matching on a data stream sent by a video server (104) to the first terminal, wherein the video server is configured to provide the first video stream;
when finding the first video stream, replicating, by the proxy server, the first video stream to obtain a second video stream (510); and
sending (511), by the proxy server, the second video stream to the second terminal, wherein the second video stream is used for video playing on the second terminal;
wherein before the performing, based on the stream information of the first video stream, matching on a data stream sent by a video server to the first terminal, the method further comprises:
determining a target streaming media transfer protocol based on a protocol type field in the projection proxy request message, wherein the target streaming media transfer protocol is a streaming media transfer protocol used by the first terminal, and different values of the protocol type field correspond to different streaming media transfer protocols; and
performing, based on the target streaming media protocol, the step of performing, based on the stream information of the first video stream, matching on a data stream sent by a video server to the first terminal.

2. The method according to claim 1, wherein the first video stream is a real-time streaming media transport protocol, RTP, stream, and the stream information of the first video stream comprises a 5-tuple.

3. The method according to claim 1, wherein the stream information of the first video stream comprises video unified resource locator, URL, information.

4. The method according to claim 3, wherein the projection proxy request message further comprises a network protocol address of the video server, and the method further comprises:
when the first video stream is not found, sending a video stream request message to the video server based on the projection proxy request message from the second terminal, wherein the video stream request message carries the video URL information;
receiving a third video stream, wherein the third video stream is a video stream corresponding to the video URL information; and
sending the third video stream to the second terminal.

5. The method according to claim 3 or 4, wherein the stream information of the first video stream further comprises a network protocol address of the first terminal.

6. The method according to any one of claims 1 to 5, wherein the method further comprises:
receiving a video synchronization message periodically sent by the first terminal, and forwarding the video synchronization message to the second terminal, wherein the video synchronization message comprises the stream information of the first video stream, and the video synchronization message further comprises at least one of a play progress and head rotation information of the first terminal.

7. The method according to any one of claims 1 to 6, wherein the method further comprises:
receiving a projection proxy end request message from the second terminal, wherein the projection proxy end request message is used to request the proxy server to end a matching process for the first video stream; and
stopping matching on the data stream sent by the video server to the first terminal.

8. A video projection method, applied to a second terminal, wherein the second terminal (102), a proxy server (103), and a first terminal (101) are located in a same local area network, the proxy server (103) is a unified network egress of the local area network, and the method comprises:
receiving (506), by the second terminal (102), a projection request message from the first terminal, wherein the projection request message carries at least stream information of a first video stream that is being played by the first terminal;
sending, by the second terminal (102), a projection proxy request message to the proxy server, wherein the projection proxy request message carries at least the stream information of the first video stream that is being played by the first terminal;
receiving, by the second terminal (102), a second video stream sent by the proxy server, wherein the second video stream is obtained by replicating the first video stream received by the proxy server;
receiving, by the second terminal (102), a video synchronization message sent by the first terminal, wherein the video synchronization message comprises the stream information of the first video stream, and the video synchronization message further comprises either a play progress or head rotation information of the first terminal; and
performing, by the second terminal (102), video playing based on the video synchronization message and the second video stream.

9. The method according to claim 8, wherein the first video stream is an RTP stream, and the stream information of the first video stream comprises a 5-tuple.

10. The method according to claim 8, wherein the stream information of the first video stream comprises video URL information.

11. The method according to claim 10, wherein the stream information of the first video stream further comprises a network protocol address of the first terminal.

12. The method according to any one of claims 8 to 11, wherein a protocol type field of the projection proxy request message is used to indicate a streaming media transfer protocol used by the first terminal.

13. The method according to any one of claims 8 to 12, wherein the method further comprises:
receiving a projection end request message from the first terminal; and
sending a projection proxy end request message to the proxy server, wherein the projection proxy end request message is used to request the proxy server to end a matching process for the first video stream.

14. A device comprising a computer program product, wherein the computer program product stores a computer program, the computer program comprises a program instruction, and when the program instruction is executed, the device is enabled to perform the method according to any one of claims 1 to 7 or the device is enabled to perform the method according to any one of claims 8 to 13.

## Patentansprüche

1. Videoprojektionsverfahren, das auf einen Proxy-Server (103) angewendet wird, wobei sich der Proxy-Server, ein erstes Endgerät (101) und ein zweites Endgerät (102) in einem gleichen lokalen Netzwerk befinden, der Proxy-Server ein einheitlicher Netzwerkausgang des lokalen Netzwerks ist und das Verfahren umfasst:
Empfangen (508), an dem Proxy-Server, einer Projektions-Proxy-Anforderungsnachricht von dem zweiten Endgerät, wobei die Projektions-Proxy-Anforderungsnachricht mindestens Stream-Informationen eines ersten Videostreams trägt, der durch das erste Endgerät wiedergegeben wird;
Durchführen (509), durch den Proxy-Server basierend auf den Stream-Informationen des ersten Videostreams, eines Abgleichs an einem Datenstream, der durch einen Videoserver (104) an das erste Endgerät gesendet wird, wobei der Videoserver konfiguriert ist, um den ersten Videostream bereitzustellen;
beim Auffinden des ersten Videostreams, Replizieren, durch den Proxy-Server, des ersten Videostreams, um einen zweiten Videostream (510) zu erhalten; und
Senden (511), durch den Proxy-Server, des zweiten Videostreams an das zweite Endgerät, wobei der zweite Videostream für die Videowiedergabe auf dem zweiten Endgerät verwendet wird;
wobei das Verfahren vor dem Durchführen des Abgleichs an einem Datenstream, der durch einen Videoserver an das erste Endgerät gesendet wird, basierend auf den Stream-Informationen des ersten Videostreams ferner umfasst:
Bestimmen eines Ziel-Streaming-Media-Übertragungsprotokolls basierend auf einem Protokolltypfeld in der Projektions-Proxy-Anforderungsnachricht, wobei das Ziel-Streaming-Media-Übertragungsprotokoll ein Streaming-Media-Übertragungsprotokoll ist, das durch das erste Endgerät verwendet wird, und verschiedene Werte des Protokolltypfelds verschiedenen Streaming-Media-Übertragungsprotokollen entsprechen; und
Durchführen, basierend auf dem Ziel-Streaming-Medienprotokoll, des Schritts des Durchführens, basierend auf den Stream-Informationen des ersten Videostreams, des Abgleichs an einem Datenstream, der durch einen Videoserver an das erste Endgerät gesendet wird.

2. Verfahren nach Anspruch 1, wobei der erste Videostream ein Echtzeit-Streaming-Media-Transport-Protokoll(RTP)-Stream ist, und die Stream-Informationen des ersten Videostreams ein 5-Tupel umfassen.

3. Verfahren nach Anspruch 1, wobei die Stream-Informationen des ersten Videostreams Video-Unified-Resource-Locator(URL)-Informationen umfassen.

4. Verfahren nach Anspruch 3, wobei die Projektions-Proxy-Anforderungsnachricht ferner eine Netzwerkprotokolladresse des Videoservers umfasst, und das Verfahren ferner umfasst:
wenn der erste Videostream nicht gefunden wird, Senden einer Videostream-Anforderungsnachricht an den Videoserver basierend auf der Projektions-Proxy-Anforderungsnachricht von dem zweiten Endgerät, wobei die Videostream-Anforderungsnachricht die Video-URL-Informationen trägt;
Empfangen eines dritten Videostreams, wobei der dritte Videostream ein Videostream ist, der den Video-URL-Informationen entspricht; und
Senden des dritten Videostreams an das zweite Endgerät.

5. Verfahren nach Anspruch 3 oder 4, wobei Stream-Informationen des ersten Videostreams ferner eine Netzwerkprotokolladresse des ersten Endgeräts umfassen.

6. Verfahren nach einem der Ansprüche 1 bis 5, wobei das Verfahren ferner umfasst: Empfangen einer Videosynchronisationsnachricht, die durch das erste Endgerät periodisch gesendet wird, und Weiterleiten der Videosynchronisationsnachricht an das zweite Endgerät, wobei die Videosynchronisationsnachricht die Stream-Informationen des ersten Videostreams umfasst und die Videosynchronisationsnachricht ferner mindestens eines von einem Wiedergabefortschritt und Kopfdrehungsinformationen des ersten Endgeräts umfasst.

7. Verfahren nach einem der Ansprüche 1 bis 6, wobei das Verfahren ferner umfasst:
Empfangen einer Projektions-Proxy-Ende-Anforderungsnachricht von dem zweiten Endgerät, wobei die Projektions-Proxy-Ende-Anforderungsnachricht verwendet wird, um den Proxy-Server anzufordern, einen Abgleichprozess für den ersten Videostream zu beenden; und
Stoppen des Abgleichs an dem Datenstream, der durch den Videoserver an das erste Endgerät gesendet wird.

8. Videoprojektionsverfahren, das auf ein zweites Endgerät angewendet wird, wobei sich das zweite Endgerät (102), ein Proxy-Server (103) und ein erstes Endgerät (101) in einem gleichen lokalen Netzwerk befinden, der Proxy-Server (103) ein einheitlicher Netzwerkausgang des lokalen Netzwerks ist und das Verfahren umfasst:
Empfangen (506), durch das zweite Endgerät (102), einer Projektionsanforderungsnachricht von dem ersten Endgerät, wobei die Projektionsanforderungsnachricht mindestens Stream-Informationen eines ersten Videostreams trägt, der durch das erste Endgerät wiedergegeben wird;
Senden, durch das zweite Endgerät (102), einer Projektions-Proxy-Anforderungsnachricht an den Proxy-Server, wobei die Projektions-Proxy-Anforderungsnachricht mindestens die Stream-Informationen des ersten Videostreams trägt, der durch das erste Endgerät wiedergegeben wird;
Empfangen, durch das zweite Endgerät (102), eines zweiten Videostreams, der durch den Proxy-Server gesendet wird, wobei der zweite Videostream durch Replizieren des ersten Videostroms erhalten wird, der durch den Proxy-Server empfangen wird;
Empfangen, durch das zweite Endgerät (102), einer Videosynchronisationsnachricht, die durch das erste Endgerät gesendet wird, wobei die Videosynchronisationsnachricht die Stream-Informationen des ersten Videostreams umfasst und die Videosynchronisationsnachricht ferner entweder einen Wiedergabefortschritt oder Kopfdrehungsinformationen des ersten Endgeräts umfasst; und
Durchführen, durch das zweite Endgerät (102), der Videowiedergabe basierend auf der Videosynchronisationsnachricht und dem zweiten Videostream.

9. Verfahren nach Anspruch 8, wobei der erste Videostream ein RTP-Stream ist und die Stream-Informationen des ersten Videostreams ein 5-Tupel umfassen.

10. Verfahren nach Anspruch 8, wobei die Stream-Informationen des ersten Videostreams Video-URL-Informationen umfassen.

11. Verfahren nach Anspruch 10, wobei die Stream-Informationen des ersten Videostreams ferner eine Netzwerkprotokolladresse des ersten Endgeräts umfassen.

12. Verfahren nach einem der Ansprüche 8 bis 11, wobei ein Protokolltypfeld der Projektions-Proxy-Anforderungsnachricht verwendet wird, um ein durch das erste Endgerät verwendetes Streaming-Media-Übertragungsprotokoll anzugeben.

13. Verfahren nach einem der Ansprüche 8 bis 12, wobei das Verfahren ferner umfasst:
Empfangen einer Projektionsende-Anforderungsnachricht von dem ersten Endgerät; und
Senden einer Projektions-Proxy-Ende-Anforderungsnachricht an den Proxy-Server, wobei die Projektions-Proxy-Ende-Anforderungsnachricht verwendet wird, um den Proxy-Server anzufordern, einen Abgleichprozess für den ersten Videostream zu beenden.

14. Vorrichtung, die ein Computerprogrammprodukt umfasst, wobei das Computerprogrammprodukt ein Computerprogramm speichert, wobei das Computerprogramm eine Programmanweisung umfasst und wenn die Programmanweisung ausgeführt wird, die Vorrichtung in die Lage versetzt wird, das Verfahren nach einem der Ansprüche 1 bis 7 durchzuführen
oder die Vorrichtung in die Lage versetzt wird, das Verfahren nach einem der Ansprüche 8 bis 13 durchzuführen.

## Revendications

1. Procédé de projection vidéo, appliqué à un serveur mandataire (103), dans lequel le serveur mandataire, un premier terminal (101) et un second terminal (102) sont situés dans un même réseau local, le serveur mandataire est une sortie de réseau unifiée du réseau local, et le procédé comprend :
la réception (508), au niveau du serveur mandataire, d'un message de demande mandataire de projection en provenance du second terminal, dans lequel le message de demande mandataire de projection contient au moins des informations de flux d'un premier flux vidéo qui est lu par le premier terminal ;
la réalisation (509), par le serveur mandataire, sur la base des informations de flux du premier flux vidéo, d'une mise en correspondance d'un flux de données envoyé par un serveur vidéo (104) au premier terminal, dans lequel le serveur vidéo est configuré pour fournir le premier flux vidéo ;
lorsque le premier flux vidéo est trouvé, la réplication, par le serveur mandataire, du premier flux vidéo pour obtenir un deuxième flux vidéo (510) ; et
l'envoi (511), par le serveur mandataire, du deuxième flux vidéo au second terminal, dans lequel le deuxième flux vidéo est utilisé pour une lecture vidéo sur le second terminal ;
dans lequel, avant la réalisation, sur la base des informations de flux du premier flux vidéo, d'une mise en correspondance sur un flux de données envoyé par un serveur vidéo au premier terminal, le procédé comprend en outre :
la détermination d'un protocole de transfert multimédia de diffusion en continu cible sur la base d'un champ de type de protocole dans le message de demande mandataire de projection, dans lequel le protocole de transfert multimédia de diffusion en continu cible est un protocole de transfert multimédia de diffusion en continu utilisé par le premier terminal, et différentes valeurs du champ de type de protocole correspondent à différents protocoles de transfert multimédia de diffusion en continu ; et
la réalisation, sur la base du protocole multimédia de diffusion en continu cible, de l'étape consistant à réaliser, sur la base des informations de flux du premier flux vidéo, une mise en correspondance d'un flux de données envoyé par un serveur vidéo au premier terminal.

2. Procédé selon la revendication 1, dans lequel le premier flux vidéo est un flux de protocole de transport multimédia de diffusion en continu en temps réel, RTP, et les informations de flux du premier flux vidéo comprennent un 5-tuple.

3. Procédé selon la revendication 1, dans lequel les informations de flux du premier flux vidéo comprennent des informations de localisateur de ressources uniforme, URL, vidéo.

4. Procédé selon la revendication 3, dans lequel le message de demande mandataire de projection comprend en outre une adresse de protocole réseau du serveur vidéo, et le procédé comprend en outre :
lorsque le premier flux vidéo est introuvable, l'envoi d'un message de demande de flux vidéo au serveur vidéo sur la base du message de demande mandataire de projection à partir du second terminal, dans lequel le message de demande de flux vidéo contient les informations URL vidéo ;
la réception d'un troisième flux vidéo, dans lequel le troisième flux vidéo est un flux vidéo correspondant aux informations URL vidéo ; et
l'envoi du troisième flux vidéo au second terminal.

5. Procédé selon la revendication 3 ou 4, dans lequel les informations de flux du premier flux vidéo comprennent en outre une adresse de protocole réseau du premier terminal.

6. Procédé selon l'une quelconque des revendications 1 à 5, dans lequel le procédé comprend en outre :
la réception d'un message de synchronisation vidéo envoyé périodiquement par le premier terminal, et le transfert du message de synchronisation vidéo au second terminal, dans lequel le message de synchronisation vidéo comprend les informations de flux du premier flux vidéo, et le message de synchronisation vidéo comprend en outre au moins l'une parmi des informations relatives à la progression de la lecture et à la rotation de la tête du premier terminal.

7. Procédé selon l'une quelconque des revendications 1 à 6, dans lequel le procédé comprend en outre :
la réception d'un message de demande de fin mandataire de projection en provenance du second terminal, dans lequel le message de demande de fin mandataire de projection est utilisé pour demander au serveur mandataire de mettre fin à un processus de mise en correspondance pour le premier flux vidéo ; et
l'arrêt d'une mise en correspondance sur le flux de données envoyé par le serveur vidéo au premier terminal.

8. Procédé de projection vidéo, appliqué à un second terminal, dans lequel le second terminal (102), un serveur mandataire (103) et un premier terminal (101) sont situés dans un même réseau local, le serveur mandataire (103) est une sortie de réseau unifiée du réseau local, et le procédé comprend :
la réception (506), par le second terminal (102), d'un message de demande de projection en provenance du premier terminal, dans lequel le message de demande de projection contient au moins des informations de flux d'un premier flux vidéo qui est lu par le premier terminal ;
l'envoi, par le second terminal (102), d'un message de demande mandataire de projection au serveur mandataire, dans lequel le message de demande mandataire de projection contient au moins les informations de flux du premier flux vidéo qui est lu par le premier terminal ;
la réception, par le second terminal (102), d'un deuxième flux vidéo envoyé par le serveur mandataire, dans lequel le deuxième flux vidéo est obtenu par réplication du premier flux vidéo reçu par le serveur mandataire ;
la réception, par le second terminal (102), d'un message de synchronisation vidéo envoyé par le premier terminal, dans lequel le message de synchronisation vidéo comprend les informations de flux du premier flux vidéo, et le message de synchronisation vidéo comprend en outre soit des informations relatives à la progression de la lecture, soit des informations relatives à la rotation de la tête du premier terminal ; et
la réalisation, par le second terminal (102), d'une lecture vidéo sur la base du message de synchronisation vidéo et du deuxième flux vidéo.

9. Procédé selon la revendication 8, dans lequel le premier flux vidéo est un flux RTP, et les informations de flux du premier flux vidéo comprennent un 5-tuple.

10. Procédé selon la revendication 8, dans lequel les informations de flux du premier flux vidéo comprennent des informations URL vidéo.

11. Procédé selon la revendication 10, dans lequel les informations de flux du premier flux vidéo comprennent en outre une adresse de protocole réseau du premier terminal.

12. Procédé selon l'une quelconque des revendications 8 à 11, dans lequel un champ de type de protocole du message de demande mandataire de projection est utilisé pour indiquer un protocole de transfert multimédia de diffusion en continu utilisé par le premier terminal.

13. Procédé selon l'une quelconque des revendications 8 à 12, dans lequel le procédé comprend en outre :
la réception d'un message de demande de fin de projection en provenance du premier terminal ; et
l'envoi d'un message de demande de fin mandataire de projection au serveur mandataire, dans lequel le message de demande de fin mandataire de projection est utilisé pour demander au serveur mandataire de mettre fin à un processus de mise en correspondance pour le premier flux vidéo.

14. Dispositif comprenant un produit-programme informatique, dans lequel le produit-programme informatique stocke un programme informatique, le programme informatique comprend une instruction de programme, et lorsque l'instruction de programme est exécutée, le dispositif est activé pour réaliser le procédé selon l'une quelconque des revendications 1 à 7.
ou le dispositif est activé pour réaliser le procédé selon l'une quelconque des revendications 8 à 13.
